# DEMANDE DE BREVET EUROPEEN

(11) **EP 3 404 277 A1**
(43) Date de publication de la demande: **21.11.2018**
(21) Numéro de dépôt: 18173172.0
(22) Date de dépôt: 18.05.2018
(51) Int. Cl.: F16D 3/205

(54) **ENSEMBLE DE ROULEMENT POUR JOINT HOMOCINÉTIQUE ET JOINT HOMOCINÉTIQUE CORRESPONDANT**

(30) Priorité: 19.05.2017 FR 1754464
(71) Demandeur: GKN Driveline S.A., 78955 Carrieres-sous-Poissy (FR)
(72) Inventeur: FRANCOIS, Marc, 78590 NOISY LE ROI (FR)
(74) Mandataire: Lavoix

(57) **Abrégé**

Cet ensemble de roulement (16) pour joint homocinétique comprend une bague intérieure (18) comprenant une première surface d'extrémité de bague (28) dirigée dans un premier sens (S1), un galet extérieur (20) entourant la bague intérieure (18) et ayant une première surface d'extrémité de galet (36) dirigée dans le premier sens (S1) ; une couronne d'aiguilles (22) disposée entre la bague intérieure et le galet extérieur pour permettre leur pivotement relatif autour d'un axe longitudinal commun (Z-Z), et des moyens de retenue axiale (24) de la couronne d'aiguilles (22) et de la bague intérieure (18) sur le galet extérieur (20). Les moyens de retenue axiale comprennent une première rondelle (44) retenant la bague intérieure par rapport au galet extérieur dans le premier sens. Les moyens de retenue axiale comprennent une première surface de retenue (48) de la première rondelle (44) par rapport au galet extérieur disposée sur le galet extérieur et dirigée dans un second sens (S2), opposé au premier sens (S1). La première rondelle (44) est une rondelle fermée. Application aux joints homocinétiques.

## Description

La présente invention concerne un ensemble de roulement pour joint homocinétique, du type comprenant
- une bague intérieure comprenant une première surface d'extrémité de bague dirigée dans un premier sens,
- un galet extérieur entourant la bague intérieure et ayant une première surface d'extrémité de galet dirigée dans ledit premier sens ;
- une couronne d'aiguilles disposée entre la bague intérieure et le galet extérieur pour permettre leur pivotement relatif autour d'un axe longitudinal commun (Z-Z), et
- des moyens de retenue axiale de la couronne d'aiguilles et de la bague intérieure sur le galet extérieur,
- les moyens de retenue axiale comprenant une première rondelle retenant la bague intérieure par rapport au galet extérieur dans le premier sens,
les moyens de retenue axiale comprenant une première surface de retenue de la première rondelle par rapport au galet extérieur disposée sur le galet extérieur et dirigée dans un second sens, opposé au premier sens.

Elle s'applique notamment aux joints homocinétiques à tripode pour transmissions de véhicules automobiles.

On connaît un tel ensemble par le brevet US5591085. La Figure 7 de ce brevet montre un ensemble comprenant une rondelle fendue 13 ou « circlips » qui retient axialement la bague intérieure et la couronne d'aiguilles sur le galet extérieur dans le sens dirigé à l'opposé de l'axe central du tripode (vers le haut sur la Figure 7). L'ensemble comprend également un anneau de pression 8 qui retient la bague intérieure 4 et la couronne d'aiguilles sur le galet extérieur dans un sens dirigé vers l'axe central du tripode.

Ce document ne spécifie pas la forme exacte de l'anneau de pression 8 du mode de réalisation de la Figure 7.

On connait du document JP-H-9280263 un joint homocinétique ayant un élément coulissant (« slider » 36 en anglais) qui comporte des parties plastiquement déformées 40, 44, situées à un emplacement radialement extérieur par rapport à l'axe du tripode, afin de retenir un anneau sur l'ensemble.

Le document FR-2869965 divulgue un ensemble de roulement dans lequel la bague intérieure dépasse, à l'état monté, axialement le galet extérieur, et ceci du côté radialement vers l'extérieur par rapport à l'axe du tripode.

Par rapport au document US5591085, les forces de retenue de la bague intérieure et des aiguilles sur le galet extérieur dans un sens dirigé radialement vers l'intérieur sont relativement faibles et l'ensemble est couteux à fabriquer.

La présente invention a pour but de pallier les inconvénients cités, et de proposer un ensemble de roulement pour joint homocinétique qui conduise à une charge nominale importante pour un cout de fabrication donné. D'autres buts à atteindre sont un faible encombrement et une durée de vie importante.

A cet effet, l'invention a pour objet un ensemble de roulement du type précité, caractérisé en ce que la première rondelle est une rondelle fermée.

Selon des modes particuliers de réalisation, l'invention comporte l'une ou plusieurs des caractéristiques suivantes :
- la première rondelle est de forme circulaire sur tout son pourtour ;
- la première surface de retenue est formée par une portion plastiquement déformée, notamment matée ou repoussée ou sertie, du galet extérieur ou par une collerette intérieure du galet extérieur ;
- le galet extérieur comprend une surface de roulement des aiguilles et une surface d'enveloppe entourant la première rondelle et dans lequel
soit la surface d'enveloppe et la surface de roulement ont un même diamètre,
soit la piste de roulement a un diamètre inférieur au diamètre de la surface d'enveloppe ;
- la première rondelle est en contact avec la première surface d'extrémité de bague ;
- les moyens de retenue axiale comprennent une gorge de retenue ménagée dans le galet extérieur et une seconde rondelle ouverte et s'étendant dans la gorge de retenue ;
- la bague intérieure comprend une seconde surface d'extrémité de bague dirigée dans le second sens et la seconde rondelle est en contact avec la seconde surface d'extrémité de bague ;
- la bague intérieure comprend une surface intérieure cylindrique ou bombée ; et
- le galet extérieur comprend une surface de roulement bombée, notamment une surface de tore partiel ou de sphère partielle ou de tores partiels ou de sphères partielles, ou une surface de roulement cylindrique.

L'invention a en outre pour objet un joint homocinétique comprenant
- un élément femelle délimitant au moins une paire de pistes en vis-à-vis,
- un élément mâle comprenant un axe central (X-X) et au moins un bras, et
- un ensemble de roulement, caractérisé en ce que l'ensemble de roulement est un ensemble de roulement tel que défini ci-dessus et en ce que ledit premier sens est dirigé vers l'axe central.

L'invention sera mieux comprise à la lecture de la description qui va suivre, donnée uniquement à titre d'exemple et faite en se référant aux dessins annexés, sur lesquels :
- la Figure 1 est une vue en coupe transversale d'une portion d'un joint de transmission comprenant un ensemble de roulement selon l'invention, en position alignée;
- la Figure 2 est une vue de face, d'une première rondelle du joint de transmission,
- la Figure 3 est une vue de face, d'une seconde rondelle du joint de transmission,
- les Figures 4 à 6 sont des vues en coupe, illustrant des première à troisième variantes de l'ensemble de roulement selon l'invention.

Il est à noter que chaque caractéristique individuelle divulguée en liaison avec un mode de réalisation ou avec une variante donnée, peut être appliquée individuellement ou en toute combinaison à tous les autres modes de réalisation ou variantes divulgués.

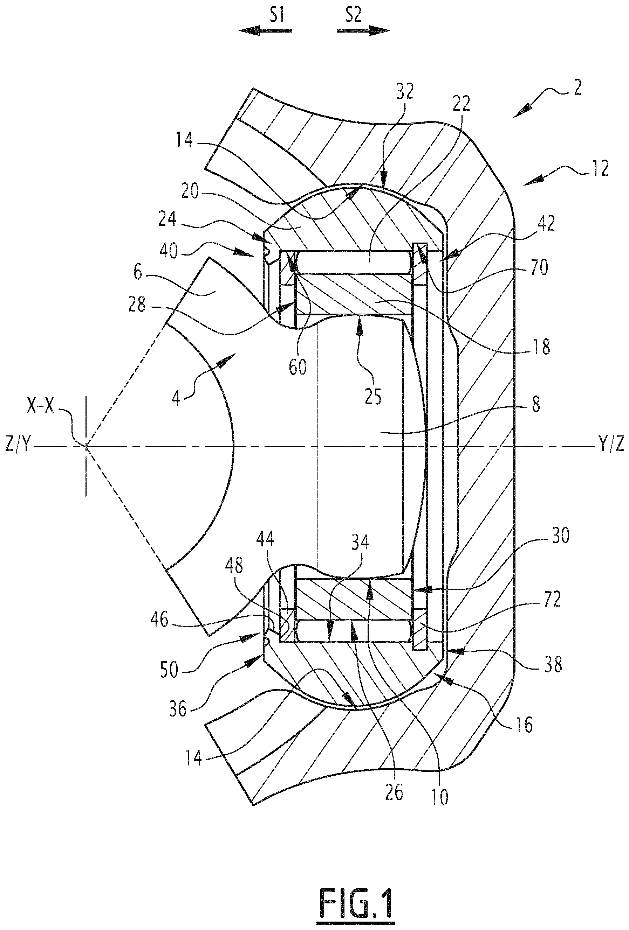

Le joint homocinétique 2 illustré par la Figure 1 comprend essentiellement :
(1) Un élément mâle ou tripode 4 comportant un moyeu 6, d'axe central X-X, sur lequel font saillies trois bras 8 radiaux espacés angulairement de 120°. La partie d'extrémité de chaque bras 8 forme une portée bombée, notamment sphérique, 10 venue de matière et centrée sur l'axe Y-Y du bras correspondant. Cet élément mâle 4 est solidaire d'un premier arbre de rotation non représenté.
(2) Un élément femelle ou tulipe 12 dont l'axe central, dans la position alignée du joint représentée, est confondu avec l'axe X-X. De part et d'autre de chaque bras 8, cette tulipe 12 présente deux pistes de roulement 14 en vis-à-vis. Cet élément femelle 12 est solidaire d'un deuxième arbre de rotation non représenté.
(3) Pour chaque bras 8, un ensemble de roulement 16 d'axe Z-Z, cet axe Z-Z étant confondu avec l'axe Y-Y du bras 8 correspondant dans la position alignée représentée sur la Figure 1.

Les trois ensembles de roulement 16 étant identiques, un seul sera décrit ci-dessous.

Au cours de cette description, où le joint est supposé aligné, les termes « radial », « axial », « longitudinal », « transversal » s'entendent, sauf indication contraire, par rapport à l'ensemble de roulement 16 décrit et donc à son axe Z-Z.

L'ensemble de roulement 16 comprend :
- une bague intérieure 18 en forme générale de cylindre creux d'axe Z-Z,
- un galet extérieur 20 de forme générale de révolution d'axe Z-Z et entourant à distance la bague intérieure 18,
- une couronne d'aiguilles 22 disposée entre la bague intérieure 18 et le galet extérieur 20, et
- des moyens de retenue axiale 24 de la couronne d'aiguilles 22 et de la bague intérieure 18 sur le galet extérieur 20.

La bague intérieure 18 comporte une surface de contact cylindrique, notamment à section circulaire, intérieure 25 qui s'applique de manière coulissante et rotulante sur la portée 10 du bras 8, et une surface cylindrique à section circulaire extérieure 26 de roulement sur laquelle roule la couronne d'aiguilles 22. La bague intérieure 18 comporte une première surface d'extrémité 28 et une seconde surface d'extrémité 30, Ces deux surfaces d'extrémité 28, 30 sont des surfaces frontales planes, s'étendant perpendiculairement à l'axe Z-Z. La première surface d'extrémité 28 est dirigée dans un premier sens S1 dirigé radialement vers l'intérieur par rapport à l'axe central X-X du moyeu 6, tandis que la seconde surface d'extrémité 30 est dirigée dans un second sens S2 dirigé radialement vers l'extérieur par rapport à l'axe central X-X.

Le galet extérieur 20 comporte une surface de roulement extérieure 32 en forme de tore partiel ou en forme de sphère partielle et une surface de roulement intérieure 34 cylindrique à section circulaire. La longueur axiale de cette surface de roulement intérieure 34 est sensiblement identique à la longueur des aiguilles de la couronne d'aiguilles 22. La couronne d'aiguilles 22 roule sur cette surface de roulement 34. Le galet extérieur 20 comporte par ailleurs une première surface d'extrémité 36, dirigée dans le même sens S1 que la première surface d'extrémité 28 de la bague intérieure 18, et une seconde surface d'extrémité 38, dirigée dans le sens opposé S2.

Les moyens de retenue axiale 24 comprennent d'une part des moyens de retenue 40 des aiguilles de la couronne d'aiguilles 22 contre un déplacement dans le premier sens S1, et d'autre part des moyens de retenue 42 des aiguilles de la couronne d'aiguilles 22 contre un déplacement dans le second sens S2.

Les moyens de retenue 40 de la couronne d'aiguilles 12 comprennent une première rondelle de retenue 44. La première rondelle de retenue 44 retient la bague intérieure 18 et la couronne d'aiguilles 22 par rapport au galet extérieur 20 dans le premier sens S1.

Les moyens de retenue 40 comprennent une collerette annulaire 46 disposée sur une extrémité axiale du galet extérieur 20 et formant une première surface de retenue 48 dirigée dans le second sens S2. La surface de retenue 48 retient axialement la rondelle de retenue par rapport au galet extérieur 20 dans le sens S1. La collerette annulaire 46 fait radialement saillie par rapport à la surface de roulement intérieure 34 du galet extérieur 20.

La collerette annulaire 46 a une largeur radiale qui est inférieure au diamètre des aiguilles 12.

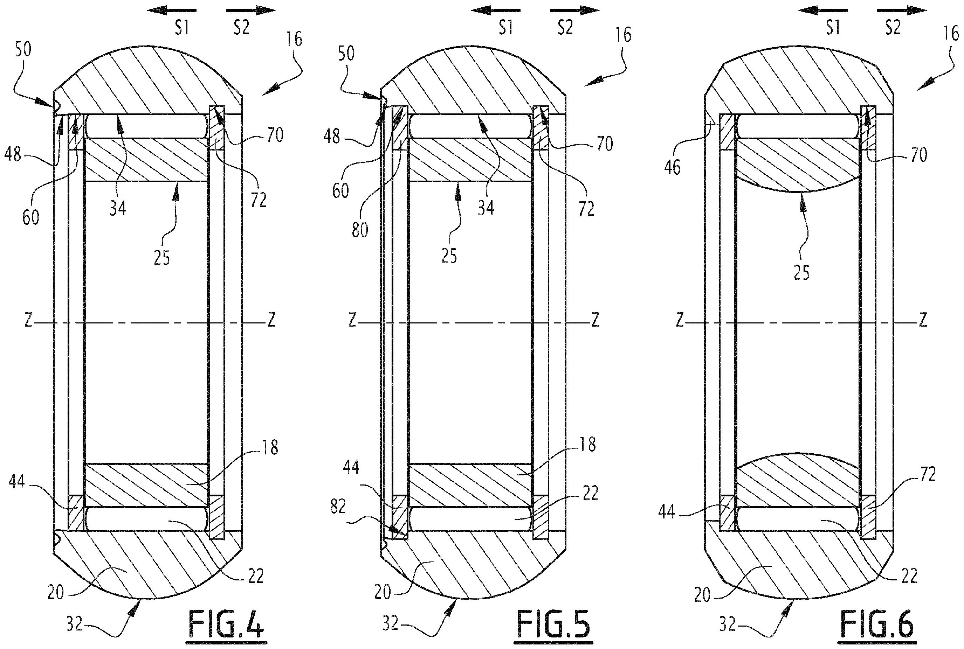

La collerette annulaire 46 est une partie plastiquement déformée du galet extérieur 20, notamment une partie matée ou repoussée ou sertie, Ainsi, le galet extérieur comprend au moins un creux de déformation plastique 50. Le ou chaque creux de déformation plastique 50 comprend un creux axialement ouvert vers le premier sens S1 et est en particulier une gorge de déformation. Dans le cas présent, la surface de retenue 48 est formée exclusivement par déformation plastique d'une collerette initiale. La collerette initiale, c'est-à-dire avant déformation plastique, a une hauteur radiale inférieure à la hauteur radiale de la collerette annulaire 46. La hauteur radiale de la surface de retenue 48 est donc augmentée par la déformation plastique. Une collerette de faible hauteur a l'avantage de nécessiter moins d'enlèvement de matière, dans le cas d'un tournage à partir d'un tube, ou de faciliter le forgeage dans le cas d'un forgeage. Le sertissage, donc la déformation plastique, permet d'augmenter la hauteur de la collerette. Le sertissage permet également de créer la collerette si elle n'existe pas, comme ceci est le cas du mode de réalisation de la Figure 4 (voir ci-dessous).

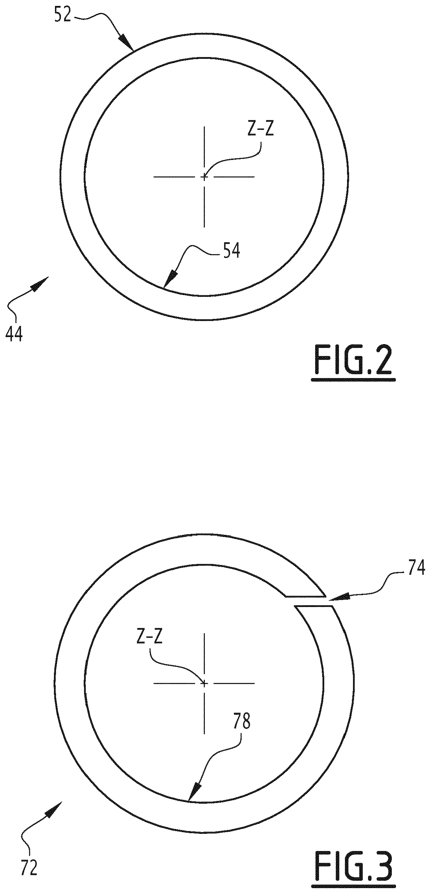

Comme représentée sur la Figure 2, la rondelle de retenue 44 est une rondelle fermée sur son pourtour. En d'autres termes, la rondelle de retenue 44 ne comprend pas de fente radialement traversant. La rondelle de retenue 44 est de forme circulaire sur tout son pourtour. Notamment à l'état non-contraint, la rondelle de retenue 44 est de forme circulaire, c'est-à-dire elle présente un profil axial extérieur 52 circulaire et un profil axial intérieur 54 circulaire. Ainsi, la rondelle de retenue 44 est économique à fabriquer et a une capacité de retenue supérieure à celle d'une bague fendue ayant les mêmes dimensions et étant fabriqué en le même matériau.

La rondelle de retenue 44 s'applique contre la surface de retenue 48 et forme une surface de retenue des aiguilles, dirigée dans le second sens S2. Lors du fonctionnement du joint, les aiguilles entrent en contact avec cette surface de retenue des aiguilles.

La largeur radiale de la rondelle de retenue 44 est supérieure au diamètre des aiguilles. Le diamètre intérieur de la rondelle de retenue 44 est inférieur au diamètre extérieur de la bague intérieure 18, de sorte que la surface de la rondelle de retenue 44 entre également en contact avec la première surface 28 d'extrémité de la bague intérieure 18.

Le galet extérieur 20 comprend une surface d'enveloppe 60, entourant la première rondelle 44. La surface d'enveloppe 60 a un diamètre sensiblement égal, c'est-à-dire aux tolérances de fabrication près, au diamètre du profil axial extérieur 52 (Figure 2) de la rondelle de retenue 44. L'ajustement entre ces deux diamètres est tel que la rondelle de retenue est placée à jeu ou à serrage dans la surface d'enveloppe. L'ajustement entre la rondelle et la surface 34 est en tout cas suffisant pour permettre l'assemblage de la rondelle de retenue dans le galet 20.

L'ordre de fabrication est dans le cas des Figures 1 et 4 par exemple : tournage d'une ébauche de galet extérieur - sertissage de l'ébauche de galet extérieur en obtenant la surface de retenue 48 et éventuellement de la collerette 46 - traitement thermique de l'ébauche de galet extérieur - rectification des surfaces du galet extérieur - mise en place de la rondelle 44 de retenue sous jeu dans le sens S1 par rapport au galet extérieur 20 sur la Figure 1.

La surface d'enveloppe 60 et la surface de roulement intérieure 34 ont un même diamètre et, dans le cas présent, sont adjacentes l'une de l'autre. Aussi, la réalisation du galet extérieur 20 avant sertissage ou déformation plastique est facile car elle comporte une surface 34 à diamètre intérieur proche du diamètre intérieur de la surface 60. Ainsi la fabrication de l'ensemble de roulement 16 est économique.

Les moyens de retenue 42 comprennent une gorge de retenue 70 ménagée dans le galet extérieur 20, adjacente à la surface de roulement 34 et une seconde rondelle de retenue 72 s'étendant dans la gorge de retenue 70.

Comme illustré sur la Figure 3, la seconde rondelle de retenue 72 est une rondelle fendue comportant une fente 74 radialement traversante. La fente 74 permet une déformation élastique de la seconde rondelle de retenue 72 de telle sorte que la seconde rondelle de retenue 72 puisse être encliquetée dans la gorge 70.

Le diamètre du profil axial intérieur 78 (Figure 3) de la seconde rondelle 72, à l'état disposé dans la gorge de retenue 70, est inférieur au diamètre extérieur de la bague intérieure 18. Ainsi, la seconde rondelle de retenue 72 est en contact avec la seconde surface d'extrémité 30 et la bague intérieure 18 est retenue dans le second sens S2 par rapport à la rondelle de retenue 72. Lors du fonctionnement du joint, la couronne d'aiguilles 22 est également retenue dans le second sens S2 par rapport à la seconde rondelle de retenue 72 et par rapport au galet extérieur.

Lors du fonctionnement du joint, les aiguilles de la couronne 22 entrent en contact avec les deux rondelles de retenue 44 et 72.

Il est à noter qu'en l'absence de la tulipe 12, la bague intérieure 18 et la couronne d'aiguilles 22 sont bloqués dans les deux sens S1 et S2 par rapport au galet extérieur 20.

Sur la Figure 4 est représentée une première variante de l'ensemble de roulement du joint des Figures 1 à 3. La Figure 4 correspond à la Figure 1, l'élément mâle 4 et l'élément femelle 12 étant omis. Dans ce qui suit, uniquement les différences par rapport au joint des Figures 1 à 3 seront décrites. Les éléments analogues portent les mêmes références.

La première surface de retenue 48 n'est pas perpendiculairement par rapport à l'axe Z-Z, mais est une surface tronconique obtenue par une déformation plastique du galet extérieur 20.

Sur la Figure 5 est représentée une deuxième variante de l'ensemble de roulement 16 du joint des Figures 1 à 3. La Figure 5 correspond à la Figure 4. Dans ce qui suit, uniquement les différences par rapport à la première variante seront décrites. Les éléments analogues portent les mêmes références.

La surface de roulement intérieure 34 a un diamètre inférieur au diamètre de la surface d'enveloppe 60. Ainsi, le galet extérieur 20 comporte une portion étagée 80 s'étendant entre les surfaces 34 et 60 et formant une surface d'appui 82 dirigée dans le premier sens S1 et contre laquelle s'applique la rondelle de retenue 44.

Ainsi, la position axiale de la rondelle de retenue 44 par rapport aux aiguilles et au galet est définie.

L'ajustement entre les deux diamètres des surface d'enveloppe 60 et de la rondelle de retenue 44 est tel que la rondelle de retenue est placée avec ou sans jeu dans la surface d'enveloppe 60.

L'ordre de fabrication est dans le cas de la Figure 5 par exemple : tournage d'une ébauche de galet extérieur - mise en place de la rondelle de retenue dans la surface d'enveloppe 60 avec ou sans jeu radial - sertissage de l'ébauche de galet extérieur en obtenant la surface de retenue 48 - traitement thermique de l'ébauche de galet extérieur avec la rondelle de retenue 44.

Sur la Figure 6 est représentée une troisième variante de l'ensemble de roulement 16 du joint des Figures 1 à 3. Dans ce qui suit, uniquement les différences par rapport à l'ensemble de roulement du joint des Figures 1 à 3 seront décrites. Les éléments analogues portent les mêmes références.

La surface de contact intérieure 25 de la bague intérieure 18 n'est pas cylindrique, mais bombée d'une manière convexe et a notamment une forme de tore partiel d'axe Z-Z.

En conséquence, le bras 8, d'une manière non représentée a une portée 10 cylindrique à section circulaire.

Par ailleurs, la collerette 46 et la première surface de retenue 48 ne sont pas obtenues par une déformation plastique. En conséquence, le galet extérieur 20 ne comprend pas de creux 50.

L'ajustement entre les deux diamètres de la surface d'enveloppe 60 et de la rondelle de retenue 44 est tel que la rondelle de retenue 44 est placée à jeu dans la surface d'enveloppe 60.

L'ordre de fabrication est dans le cas de la Figure 6 par exemple : tournage d'une ébauche de galet extérieur comportant la collerette 46 - traitement thermique de l'ébauche de galet extérieur - rectification des surfaces du galet extérieur - mise en place de la rondelle 44 de retenue sous jeu.

En variante, le bras 8 comprend une portée 10 ayant une forme différente de celle énoncée ci-dessus, par exemple comme celles des bras de US6579188 ou WO2015000709A1.

En variante, la surface de roulement extérieure a une forme de sphère partielle, ou une autre forme de révolution à section transversale courbe, plane (cylindrique) ou bicourbe, tel que divulgué par exemple par FR 03 15538.

## Revendications

1. Ensemble de roulement (16) pour joint homocinétique, du type comprenant
- une bague intérieure (18) comprenant une première surface d'extrémité de bague (28) dirigée dans un premier sens (S1),
- un galet extérieur (20) entourant la bague intérieure (18) et ayant une première surface d'extrémité de galet (36) dirigée dans ledit premier sens (S1) ;
- une couronne d'aiguilles (22) disposée entre la bague intérieure et le galet extérieur pour permettre leur pivotement relatif autour d'un axe longitudinal commun (Z-Z), et
- des moyens de retenue axiale (24) de la couronne d'aiguilles (22) et de la bague intérieure (18) sur le galet extérieur (20),
- les moyens de retenue axiale (24) comprenant une première rondelle (44) retenant la bague intérieure par rapport au galet extérieur dans le premier sens,
les moyens de retenue axiale comprenant une première surface de retenue (48) de la première rondelle (44) par rapport au galet extérieur disposée sur le galet extérieur et dirigée dans un second sens (S2), opposé au premier sens (S1),
**caractérisé en ce que** la première rondelle (44) est une rondelle fermée.

2. Ensemble de roulement (16) selon la revendication 1, dans lequel la première rondelle (44) est de forme circulaire sur tout son pourtour.

3. Ensemble de roulement (16) selon la revendication 1 ou 2, dans lequel la première surface de retenue (48) est formée par une portion plastiquement déformée, notamment matée ou repoussée ou sertie, du galet extérieur ou par une collerette intérieure du galet extérieur.

4. Ensemble de roulement (16) selon l'une quelconque des revendications 1 à 3, dans lequel le galet extérieur comprend une surface de roulement (34) des aiguilles et une surface d'enveloppe (60) entourant la première rondelle et dans lequel
soit la surface d'enveloppe et la surface de roulement ont un même diamètre,
soit la piste de roulement a un diamètre inférieur au diamètre de la surface d'enveloppe.

5. Ensemble de roulement (16) selon l'une quelconque des revendications précédentes, dans lequel la première rondelle (44) est en contact avec la première surface d'extrémité de bague (28).

6. Ensemble de roulement (16) selon l'une quelconque des revendications précédentes, dans lequel les moyens de retenue axiale (24) comprennent une gorge de retenue (70) ménagée dans le galet extérieur et une seconde rondelle (72) ouverte et s'étendant dans la gorge de retenue.

7. Ensemble de roulement (16) selon l'une quelconque des revendications précédentes, dans lequel la bague intérieure (18) comprend une seconde surface d'extrémité de bague (30) dirigée dans le second sens et la seconde rondelle (72) est en contact avec la seconde surface d'extrémité de bague.

8. Ensemble de roulement (16) selon l'une quelconque des revendications précédentes, dans lequel la bague intérieure (18) comprend une surface intérieure (25) cylindrique ou bombée.

9. Ensemble de roulement (16) selon l'une quelconque des revendications précédentes, dans lequel le galet extérieur (20) comprend une surface de roulement bombée, notamment une surface de tore partiel ou de sphère partielle ou de tores partiels ou de sphères partiels, ou une surface de roulement cylindrique.

10. Joint homocinétique (2) comprenant
- un élément femelle (6) délimitant au moins une paire de pistes (14) en vis-à-vis,
- un élément mâle (4) comprenant un axe central (X-X) et au moins un bras (8), et
- un ensemble de roulement,
**caractérisé en ce que** l'ensemble de roulement (16) est un ensemble de roulement selon l'une quelconque des revendications précédentes et **en ce que** ledit premier sens (S1) est dirigé vers l'axe central (X-X).
